# EUROPÄISCHE PATENTANMELDUNG

(11) **EP 2 604 987 A1**
(43) Veröffentlichungstag der Anmeldung: **19.06.2013**
(21) Anmeldenummer: 11009906.6
(22) Anmeldetag: 16.12.2011
(51) Int. Cl.: G01F 23/296

(54) **Sensoranordnung, Behälteranordnung und Verfahren zur Füllstandserfassung eines Mediums**

(71) Anmelder: Harro Höfliger Verpackungsmaschinen GmbH, 71573 Allmersbach im Tal (DE)
(72) Erfinder: Graf, Timo, 73663 Berglen (DE); Weigel, Marco, 71554 Weissach im Tal (DE); Reske, Jochen, 74211 Leingarten (DE)
(74) Vertreter: Zurhorst, Stefan

(57) **Zusammenfassung**

Die Erfindung betrifft eine Sensoranordnung (1) zur kontaktbehafteten Erfassung eines Mediums, insbesondere eines Pulvers (2), eine Behälteranordnung mit einer solchen Sensoranordnung (1) sowie ein Verfahren zur prüfenden Erfassung des Mediums. Die Sensoranordnung (1) umfasst einen Sensor (3) mit einer Sensorfläche (4), wobei eine Abdeckung (5) der Sensorfläche (4) und eine Erregungseinrichtung (6) für eine Schwingungserregung der Abdeckung (5) vorgesehen sind. Die Behälteranordnung umfasst einen Behälter (13), in dem das zu erfassende Medium gehalten ist, sowie die im Behälter (13) mittels ihrer Abdeckung (5) füllstandsabhängig in direktem Kontakt mit dem zu prüfenden Medium stehende Sensoranordnung (1). Im erfindungsgemäßen Verfahren wird das zu erfassende Medium in den Behälter (13) gefüllt. Die Abdeckung (5) der Sensorfläche (4) wird mittels der Erregungseinrichtung (6) zur Schwingung angeregt und dadurch von anhaftendem Medium befreit. Mittels der Sensoranordnung (1) wird erfasst, ob das Medium in direktem Kontakt mit der Abdeckung (5) der Sensoranordnung (1) steht. Abhängig von der Auswertung der Erfassung wird Medium in den Behälter (13) nachgefüllt.

## Beschreibung

Die Erfindung betrifft eine Sensoranordnung der im Oberbegriff des Anspruchs 1 angegebenen Gattung, eine Behälteranordnung mit einem derartigen Sensor sowie ein Verfahren zur prüfenden Erfassung des Mediums, insbesondere eines Pulvers.

Beim Dosieren und Abfüllen eines Mediums, insbesondere eines pharmazeutischen Pulvers, ist eine hohe Prozesssicherheit erforderlich. Neben dem eigentlichen Dosier- und Abfüllvorgang des Mediums werden an verschiedenen Stationen Prüf- bzw. Erfassungsschritte durchgeführt, um mittels eines geeigneten Sensors das Vorhandensein, die Menge und/oder den Füllstand des Mediums in einem Behälter zu prüfen bzw. zu erfassen.

Ein solches Prüf- bzw. Erfassungserfordernis ergibt sich beispielsweise bei einem Behälter, aus dem eine Dosier- und Abfülleinrichtung mit dem jeweiligen Medium gespeist wird. Bestimmte Bauformen solcher Dosier- und Abfülleinrichtungen erfordern für ihre zuverlässige Funktion einen bestimmten Füllstand im Vorratsbehälter, der innerhalb gewisser Grenzen weder unter- noch überschritten werden darf.

Der Füllstand im Vorratsbehälter wird nach dem Stand der Technik mittels eines geeigneten Sensors erfasst. Der Sensor weist einen Sensorfläche auf und ist derart im Vorratsbehälter angeordnet, dass seine Sensorfläche bei einem bestimmten Füllstand in direktem Kontakt mit dem im Vorratsbehälter bevorrateten Medium steht. Es erfolgt eine kontaktbehaftete Erfassung des Mediums, wobei abhängig vom Auswerteergebnis eine Füllstandsregulierung des Mediums im Vorratsbehälter vorgenommen wird.

Bei diesem beispielhaften Anwendungsfall, aber auch bei anderen Anwendungsfällen, in denen eine kontaktbehaftete Erfassung des Mediums erfolgt, kommt es auf ein genaues und reproduzierbares Messergebnis an. Bestimmte zu erfassende Medien wie Flüssigkeiten und insbesondere feinkörnige pharmazeutische Pulver haben jedoch eine hohe Haftneigung, infolge dessen das Medium auch dann an der Sensorfläche haften bleibt, wenn während der Messung kein reguläres Medium an der Sensorfläche anliegt, bzw. wenn der Füllstand des Mediums bereits unterhalb der Position des Sensors abgesunken ist. Das an der Sensorfläche anhaftende Medium kann dabei zu einer Verfälschung des Messergebnisses und daraus ableitend auch zu falschen Konsequenzen führen. Insbesondere besteht die Gefahr, dass infolge eines tatsächlich unzutreffenden Messergebnisses eine Überfüllung oder eine Unterfüllung des Vorratsbehälters eintritt.

Der Erfindung liegt die Aufgabe zugrunde, eine gattungsgemäße Sensoranordnung derart weiterzubilden, dass die Zuverlässigkeit ihrer ordnungsgemäßen Erfassung gesteigert ist.

Diese Aufgabe wird durch eine Sensoranordnung mit den Merkmalen des Anspruchs 1 gelöst.

Der Erfindung liegt des Weiteren die Aufgabe zugrunde, eine Behälteranordnung anzugeben, deren Füllstand mit erhöhter Zuverlässigkeit eingestellt werden kann.

Diese Aufgabe wird durch eine Behälteranordnung mit den Merkmalen des Anspruchs 10 gelöst.

Schließlich liegt der Erfindung die Aufgabe zugrunde, ein Verfahren zur prüfenden Erfassung eines Mediums anzugeben, welches mit erhöhter Zuverlässigkeit ein zutreffendes Prüfergebnis erzeugt.

Diese Aufgabe wird durch ein Verfahren mit den Merkmalen des Anspruchs 12 gelöst.

Nach der Erfindung ist vorgesehen, dass eine Abdeckung der Sensorfläche des Sensors und eine Erregungseinrichtung für eine Schwingungserregung der Abdeckung vorgesehen sind. Bei der erfindungsgemäßen Behälteranordnung und dem zugehörigen erfindungsgemäßen Verfahren steht die Sensoranordnung mittels ihrer Abdeckung füllstandsabhängig im direkten Kontakt mit dem Medium. Die Abdeckung der Sensorfläche wird mittels der Erregungseinrichtung zur Schwingung angeregt und dadurch von anhaftendem Medium befreit, und es erfolgt eine prüfende Erfassung des Mediums mittels der Sensoranordnung.

Die von dem eigentlichen Sensor separate Abdeckung erlaubt den Einsatz von vorhandenen bzw. handelsüblichen Sensoren, womit das erfindungsgemäße Prinzip unabhängig von der Sensorbauform bzw. vom Sensorhersteller funktioniert. Mit einfachen Mitteln, geringen Kosten und hoher Prozesssicherheit wird sichergestellt, dass auch dann nichts von dem zu prüfenden Medium infolge seiner Haftungsneigung im Messbereich der Sensorfläche zurückbliebt, wenn der Füllstand des Mediums unterhalb der Sensorfläche gesunken ist oder auch sonst nicht im direkten Kontakt mit der Sensoranordnung steht. Durch die schwingungs- bzw. vibrationsbedingte Vermeidung von Anhaftungen ist selbst bei schwierigen Medien mit hoher Haftneigung ein exaktes Mess- bzw. Prüfergebnis der Sensoranordnung sichergestellt, in dessen Folge aus diesem Mess- bzw. Prüfergebnis die richtigen Maßnahmen abgeleitet werden können.

Die erfindungsgemäße Sensoranordnung kann in nahezu beliebigen Anwendungsfällen eingesetzt werden, bei denen die Gefahr einer Anhaftung des zu prüfenden Mediums besteht. Insbesondere kann eine zuverlässige Füllstandsregulierung vorgenommen werden. Hierzu ist im Behälter ein Sollfüllstand des Mediums vorgesehen, wobei die Sensoranordnung in Höhe dieses Sollfüllstandes angeordnet ist. Mittels der dort angeordneten Sensoranordnung wird erfasst, ob das Medium in direktem Kontakt mit der Abdeckung der Sensoranordnung steht. Falls die Erfassung mittels der Sensoranordnung hervorbringt, dass kein Medium in direktem Kontakt mit der Abdeckung der Sensoranordnung steht, bedeutet dies, dass der Sollfüllstand unterschritten ist, und es wird Medium in den Behälter nachgefüllt. Falls die Erfassung mittels der Sensoranordnung hervorbringt, dass das Medium in direktem Kontakt mit der Abdeckung der Sensoranordnung steht, ist der tatsächliche Füllstand hinreichend hoch, und es unterbleibt eine Nachfüllung des Mediums. Auf diese Weise kann ohne die Gefahr einer Verfälschung des Messergebnisses und unter Vermeidung von Über- oder Unterfüllung entweder ein zumindest näherungsweise konstanter Füllstand oder aber - insbesondere bei Verwendung von zwei in unterschiedlicher Höhe angeordneter Sensoranordnungen - ein variabler Füllstand innerhalb einer oberen und einer unteren Füllgrenze eingestellt werden.

Die Schwingungserregung der Abdeckung erfolgt zweckmäßig unmittelbar vor und/oder während der prüfenden Erfassung des Mediums. Bei schwierigen Messverhältnissen kann es zweckmäßig sein, die Schwingungserregung ausschließlich vor der Prüfung durchzuführen, womit dann anhaftendes Medium abgeschüttelt wird. Unmittelbar danach erfolgt die Messung bei ruhender Abdeckung, ohne dass das Messergebnis durch eine schwingende Abdeckung verfälscht werden könnte. Sollte diese Gefahr nicht bestehen, kann auch eine Messung während der Schwingungserregung erfolgen. Neben einer intermittierenden prüfenden Erfassung in bestimmten Zeitintervallen ist im letztgenannten Falle auch eine kontinuierliche prüfende Erfassung des Mediums möglich. Mit einfachem Steuerungsaufwand ist hierdurch beispielsweise eine sehr exakte Füllstandsnachführung möglich.

Für die Ausgestaltung der Abdeckung kommen verschiedene Bauformen in Betracht. Beispielsweise kann es sich um eine starre, aber beweglich gelagerte Schwingplatte handeln. In bevorzugter Weiterbildung ist die Abdeckung eine elastische Membran. Bei einfacher Ausgestaltung und kostengünstiger Fertigung lässt sich mit geringem Antriebsaufwand eine wirksame Schwingungsanregung realisieren. Die elastische Verformung der Membran während des Schwingens trägt neben dem eigentlichen Schwinghub zur Ablösewirkung auf das anhaftende Medium bei. Darüber hinaus ist mit der Membran eine zuverlässige Abdichtung des Sensors gegenüber dem zu prüfenden Medium möglich.

Es kann zweckmäßig sein, den Sensor oder zumindest einen Teil davon mit der Abdeckung mitschwingen zu lassen. In bevorzugter Weiterbildung ist der Sensor ortsfest gehalten, während die Abdeckung unabhängig vom Sensor schwingend bewegbar ist. Hierdurch sind die bewegten Massen auf ein Minimum reduziert, so dass hochfrequente Schwingungen mit guter Ablösewirkung bei geringer Antriebsleistung erzielbar sind. Da außerdem der Sensor selbst nicht von den Schwingungen beaufschlagt ist, besteht keine Gefahr der Verfälschung seiner Messergebnisse.

Es kann zweckmäßig sein, die Abdeckung mit Abstand zur Sensorfläche des Sensors anzuordnen. Hierdurch ist eine freie Schwingbewegung der Abdeckung möglich. In bevorzugter Weiterbildung liegt die Abdeckung im Ruhezustand lose zumindest näherungsweise an der Sensorfläche des Sensors an. Die Abdeckung kann hierbei zumindest eine Halbschwingung in der von der Sensorfläche fortweisenden Richtung ausführen, was für die angestrebte Ablösewirkung ausreicht. Insbesondere wird aber erreicht, dass der räumliche Abstand zwischen der Sensorfläche und dem zu prüfenden Medium minimiert ist, was der Mess- bzw. Erfassungsgenauigkeit zugute kommt.

Für die Ausgestaltung der Erregungseinrichtung kommen verschiedene Bauformen in Betracht. Beispielsweise können mechanische oder elektromagnetische Schwingungserreger gewählt werden. In einer bevorzugten Ausführungsform umfasst die Erregungseinrichtung eine pulsierende Druckwelle insbesondere in Form einer Membranpumpe sowie ein Gehäuse, wobei zumindest die Sensorfläche des Sensors im Innenraum des Gehäuses angeordnet ist, wobei die Abdeckung als Teil des Gehäuses dessen Innenraum dichtend begrenzt, und wobei eine druckübertragende Verbindung der pulsierenden Druckwelle mit dem Innenraum derart vorgesehen ist, dass der Innenraum einschließlich der Abdeckung mit dem pulsierenden Druck der Druckquelle beaufschlagbar ist. Durch einfache pneumatische Beaufschlagung der Abdeckung mit pulsierendem Druck wird eine wirkungsvolle Schwingungsanregung erzeugt, wobei insbesondere im Messbereich ein geringer Bauraum erforderlich ist. An der Abdeckung sind keine separaten, massenerhöhenden Vorrichtungen für eine Krafteinleitung oder dergleichen erforderlich, so dass die insbesondere als Membran ausgeführte Abdeckung klein, dünn und leicht ausgeführt sein kann.

In zweckmäßiger Weiterbildung umfasst das Gehäuse ein starres Halteteil für den Sensor sowie ein elastisches Formteil mit der insbesondere einteilig daran ausgebildeten Abdeckung bzw. Membran. Zweckmäßig sind dabei das starre Halteteil und der Sensor druckdicht miteinander verbunden, wobei der Innenraum im elastischen Formteil ausgebildet ist. Es ergibt sich eine kompakte und leicht herzustellende Bauform. Durch die druckdichte Verbindung des Sensors mit dem Halteteil können am Halteteil Durchbrüche für Messkabel, für den Zugang auf Einstellmittel oder dergleichen bereitgestellt werden, ohne dass dies nachteiligen Einfluss auf die Druckdichtigkeit des mit dem pulsierenden Druck beaufschlagten Innenraumes hat. Das elastische Formteil mit der einteilig daran ausgebildeten Membran stellt infolge seiner Elastizität eine zuverlässige Abdichtung gegenüber dem starren Halteteil her, was vorteilhaft und wirkungsvoll durch einen Formschluss insbesondere mittels einer umlaufenden Nut-Feder-Verbindung erzeugt werden kann.

Als bevorzugtes Material für das elastische Formteil hat sich Silikon herausgestellt. Das Material ist gut in die gewünschte Form zu bringen und bleibt dauerhaft elastisch unter Vermeidung von schwingungsbedingter Ermüdung. Die Membran kann ohne weiteres in ihrer Form auf den jeweiligen Einsatzzweck bzw. auf die gewünschte Schwingungsform angepasst werden. Des Weiteren ist Silikon als Werkstoff FDA-konform, und erfüllt damit bei direktem Kontakt mit dem zu prüfenden Medium die Anforderungen der Food and Drug Administration (FDA).

Insgesamt ist mit der erfindungsgemäßen Anordnung eine Vielzahl von Anwendungsfällen abdeckbar. Vorhandene bzw. handelsübliche Sensoren können mit einfachem Aufwand umgerüstet und für die Prüfung bzw. Erfassung von zur Anhaftung neigenden Medien modifiziert werden. Bei geringem Bauraum und hoher Wirksamkeit lässt sich durch Anpassung der Membrangeometrie, beispielsweise durch gezielte Schwächungen und/oder Aufdickungen, aber auch mittels einer Anpassung des schwingenden Druckverlaufs, das gewünschte Ergebnis des Abschüttelns von anhaftendem Medium optimieren.

Ausführungsbeispiele der Erfindung sind im Folgenden anhand der Zeichnung näher beschrieben. Es zeigen:
- Fig. 1: in einer schematischen Schnittdarstellung das Grundprinzip der erfindungsgemäßen Sensoranordnung;
- Fig. 2: in einer schematischen Seitenansicht eine erfindungsgemäße Behälteranordnung mit der in Höhe des Sollfüllstandes angeordneten Sensoranordnung nach Fig. 1;
- Fig. 3: in einer Längsschnittdarstellung eine konstruktiv ausgearbeitete Sensoranordnung entsprechend dem Prinzip nach Fig. 1 und vorgesehen für die Behälteranordnung nach Fig. 2, mit einem zweiteiligen Gehäuse, wovon ein Teil als elastisches Formteil aus Silikon zur Ausgestaltung einer Membran als schwingfähige Abdeckung für den dicht umschlossenen Sensor ausgestaltet ist.

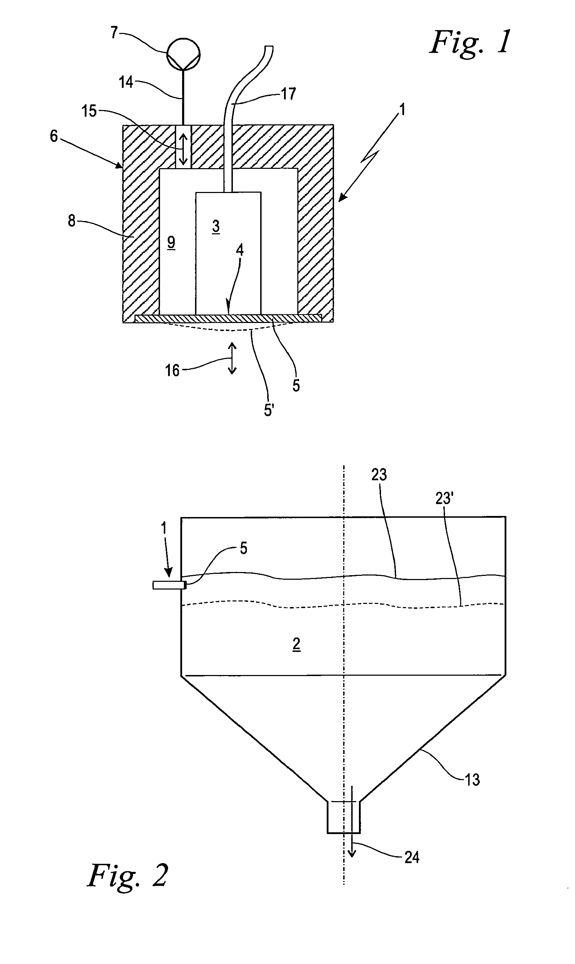

Fig. 1 zeigt in einer schematischen Schnittdarstellung anhand eines Ausführungsbeispieles der erfindungsgemäßen Sensoranordnung 1 deren prinzipiellen Aufbau und Funktionsweise. Die Sensoranordnung 1 umfasst einen Sensor 3 mit einer stirnseitigen Sensorfläche 4, an der im Betrieb die Messwerterfassung erfolgt. Des Weiteren umfasst die Sensoranordnung 1 eine Abdeckung 5, mittels derer die Sensorfläche 4 gegen das zu prüfende bzw. zu erfassende Medium (Fig. 2) abgedeckt ist. Außerdem gehört zur erfindungsgemäßen Sensoranordnung 1 eine Erregungseinrichtung 6 für die Schwingungserregung der Abdeckung 5. Die Abdeckung 5 kann eine starre, aber beweglich gelagerte Platte oder dergleichen sein und ist im gezeigten Ausführungsbeispiel eine umlaufend an ihrem Rand festgehaltene elastische Membran. Die Erregungseinrichtung 6 kann als mechanische, elektromechanische oder andere geeignete Einrichtung ausgeführt sein und ist im gezeigten Ausführungsbeispiel eine pneumatische Einrichtung. Hierzu umfasst die Erregungseinrichtung 6 eine pulsierende Druckquelle, die im gezeigten Ausführungsbeispiel in Form einer Membranpumpe 7 ausgestaltet ist, sowie ein Gehäuse 8. Die Abdeckung 5 ist dicht mit dem Gehäuse 8 verbunden und begrenzt gemeinsam mit Wänden des Gehäuses 8 einen Innenraum 9. Die Membranpumpe 7 ist mittels einer Druckleitung 14 mit dem Innenraum 9 des Gehäuses 8 druckübertragend verbunden, so dass der Innenraum 9 bei Bedarf mit dem von der Membranpumpe 7 ausgehenden pulsierenden Druck entsprechend einem Doppelpfeil 15 beaufschlagt werden kann.

Der Sensor 3 ist derart im Gehäuse 8 gehalten, dass zumindest seine Sensorfläche 4, hier der gesamte Sensor 3 im Innenraum 9 liegt und dabei mit seiner Sensorfläche 4 der Abdeckung 5 zugewandt ist. Ein Kabel 17 des Sensors 3 ist in einer Weise aus dem Gehäuse 8 herausgeführt, dass der Innenraum 9 zumindest näherungsweise druckdicht verschlossen bleibt. Die Abdeckung 5 ist in Ruheposition bei ausgeglichenem Druck im Innenraum 9 gezeigt. Der bei Bedarf in den Innenraum 9 entsprechend dem Doppelpfeil 15 eingeleitete pulsierende Druck führt zu einer schwingenden Auslenkung der Abdeckung entsprechend einem Doppelpfeil 16 mit einer Amplitude, die in der Darstellung nach Fig. 1 mit 5' bezeichnet ist. Aus der Darstellung nach Fig. 1 ergibt sich des Weiteren, dass die Schwingungsrichtung entsprechend dem Doppelpfeil 16 senkrecht, also transversal zur Sensorfläche 4 liegt. Es kann aber auch eine Ausgestaltung zweckmäßig sein, bei der die Schwingungsrichtung parallel, also lateral zur Sensorfläche 4 oder in einem beliebigen anderen Winkel liegt.

Es kann zweckmäßig sein, die Abdeckung 5 fest mit der Sensorfläche 4 und dadurch mit dem Sensor 3 insgesamt zu verbinden. In diesem Fall führt dann die Sensorfläche 4 die gleiche Schwingbewegung wie die Abdeckung 5 aus. Im gezeigten Ausführungsbeispiel ist der Sensor 3 ortsfest im Gehäuse 8 gehalten, wobei die Abdeckung 5 unabhängig vom Sensor 3 schwingend bewegbar ist. Hierzu besteht keine feste Verbindung zwischen der Abdeckung 5 und der Sensorfläche 4. Vielmehr kann zwischen der Abdeckung 5 und der Sensorfläche 4 ein definierter Abstand vorgesehen sein. Im gezeigten Ausführungsbeispiel ist dieser Abstand zumindest im Ruhezustand der Abdeckung 5 zumindest näherungsweise gleich null, so dass die Abdeckung 5 lose an der Sensorfläche 4 des Sensors 3 anliegt.

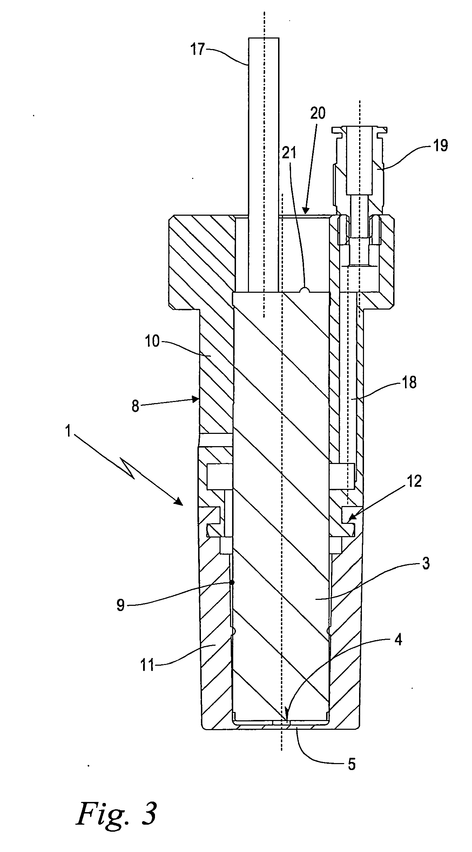

Fig. 2 zeigt in einer schematischen Seitenansicht ein Ausführungsbeispiel einer erfindungsgemäßen Behälteranordnung zur Bereitstellung eines Mediums, hier eines feinkörnigen medizinischen Pulvers 2. Die Behälteranordnung umfasst einen Behälter 13 sowie die erfindungsgemäße Sensoranordnung 1, wie sie beispielhaft im Zusammenhang mit den Fig. 1 und 3 beschrieben ist. Der Behälter 13 ist im gezeigten Ausführungsbeispiel ein Vorratsbehälter, in dem das Pulver 2 oder ein anderes Medium bevorratet und einer nicht dargestellten Dosier- und Abfülleinrichtung zugeführt wird. Hierzu weist der Behälter 13 an seinem unteren Ende einen Auslass auf, durch den das Pulver 2 entsprechend einem Pfeil 24 entnommen wird. Für die korrekte Funktion der Dosier- und Abfülleinrichtung ist im Behälter 13 ein Sollfüllstand des Mediums bzw. des Pulvers 2 vorgesehen, bei dem das Pulver 2 nach oben hin eine Oberfläche 23 in Höhe des Sollfüllstandes aufweist. Die Sensoranordnung 1 ist in Höhe dieses Sollfüllstandes bzw. der Oberfläche 23 angeordnet und derart gegenüber dem Behälter 13 positioniert, dass ihre Abdeckung 5 im Innenraum des Behälters 13 zu liegen kommt und abhängig vom tatsächlichen Füllstand des Pulvers 2 in direkten Kontakt mit dem genannten Medium treten kann. Je nach Entnahmemenge des Pulvers 2 entsprechend dem Pfeil 24 in Gewichtskraftrichtung kann der tatsächliche Füllstand bzw. die tatsächliche Oberfläche auf die mit 23' gekennzeichnete Position abfallen.

Nach dem erfindungsgemäßen Verfahren zur prüfenden Erfassung des Mediums, hier des Pulvers 2 wird zunächst das Medium in den Behälter 13 gefüllt. Beim Sollfüllstand mit der Oberfläche 23 steht das Pulver 2 in direktem Kontakt mit der Abdeckung 5. Aufgrund seiner Haftneigung kann aber das Pulver 2 oder ein anderes vergleichbares Medium in unerwünschter Menge an der Sensoranordnung 1 bzw. an deren Abdeckung 5 auch dann haften bleiben, wenn der Füllstand des Mediums bzw. des Pulvers 2 im Behälter 13 auf die unterhalb der Sensoranordnung 1 liegende Oberfläche 23' abgesunken ist. Der Sensor 3 der Sensoranordnung 1 (Fig. 1) ist ausgelegt für die prüfende Erfassung des Mediums, hier des Pulvers 2, indem mittels des Sensors 3 erkannt werden kann, ob das Pulver 2 infolge seines tatsächlichen Füllstandes im Behälter 13 an der Abdeckung 5 anliegt oder nicht. An der Abdeckung 5 anhaftendes Pulver 2 kann aber ohne weitere Maßnahmen das Erfassungsergebnis derart verfälschen, dass die Sensoranordnung 1 einen Füllstand des Pulvers 2 mit mindestens der Höhe der Sensoranordnung 1 meldet, obwohl der tatsächliche Füllstand bereits auf die Oberfläche 23' unterhalb der Sensoranordnung 1 abgesunken ist. Zur Vermeidung einer solchen Fehldetektion wird die Abdeckung 5 mittels der Erregungseinrichtung 6 (Fig. 1) zur Schwingung angeregt und dadurch von anhaftendem Medium bzw. Pulver 2 in dem Falle befreit, in dem die Oberfläche 23' tatsächlich unterhalb der Abdeckung 5 liegt. Mittels der in Höhe des Sollfüllstandes angeordneten Sensoranordnung 1 kann nun zuverlässig erfasst werden, ob das Medium bzw. das Pulver 2 in direktem Kontakt mit der Abdeckung 5 der Sensoranordnung steht. Falls die Oberfläche 23' unter den Sollfüllstand abgesunken ist, bringt die Erfassung der Sensoranordnung 1 hervor, dass kein Medium bzw. kein Pulver 2 in direktem Kontakt mit der Abdeckung 5 der Sensoranordnung 1 steht. In diesem Fall wird zusätzliches Medium bzw. Pulver 2 in den Behälter 13 nachgefüllt, bis der Sollfüllstand mit der Oberfläche 23 erreicht ist. Dieses Nachfüllen kann von Hand erfolgen. Natürlich ist auch eine automatisierte Nachfülleinrichtung möglich, bei der die Sensoranordnung 1 ihr Signal an eine nicht dargestellte Steuereinrichtung weitergibt, mittels derer abhängig vom Sensorsignal die Nachfüllung herbeigeführt wird. Falls aber die Erfassung mittels der Sensoranordnung 1 hervorbringt, dass das Medium bzw. das Pulver in direktem Kontakt mit der Abdeckung 5 der Sensoranordnung 1 steht, wenn also ein Füllstand mit der Oberfläche 23 entsprechend dem Sollfüllstand gegeben ist, unterbleibt eine weitere Nachfüllung des Mediums bzw. des Pulvers 2. Auf diese Weise wird ein zumindest näherungsweise konstanter Füllstand des Mediums bzw. des Pulvers 2 im Behälter 13 sichergestellt. Im Rahmen der Erfindung kann es aber auch zweckmäßig sein, zwei einzelne Sensoranordnungen 1 in unterschiedlichen Höhen entsprechend einer oberen und einer unteren Grenzhöhe anzubringen, wobei dann in analoger Weise der Füllstand des Mediums bzw. des Pulvers 2 zwischen der oberen und der unteren Grenzhöhe gehalten wird.

In einer bevorzugten Ausführungsform erfolgt die Schwingungserregung der Abdeckung 5 unmittelbar vor der prüfenden Erfassung des Mediums. Im Falle der unter den Sollfüllstand abgesunkenen Oberfläche 23' wird dann möglicherweise anhaftendes Pulver 2 von der Abdeckung 5 abgeschüttelt bzw. abvibriert. Im Falle des Sollfüllstandes mit der oberen Oberfläche 23 bleibt die Schwingungserregung der Abdeckung 5 ohne Wirkung. Vielmehr steht in der nachfolgenden Messung bzw. Messwerterfassung das Pulver 2 im direkten Kontakt mit der Abdeckung 5 und kann so von der Sensoranordnung 1 erfasst werden. Alternativ oder zusätzlich kann es auch zweckmäßig sein, die Schwingungserregung der Abdeckung 5 während der prüfenden Erfassung des Mediums bzw. des Pulvers 2 durchzuführen. In diesem Falle erfolgt die Messwerterfassung bei schwingender Abdeckung 5. Die prüfende Erfassung des Mediums mittels der Sensoranordnung 1 kann kontinuierlich oder intermittierend in bestimmten Zeitintervallen erfolgen. Eine vorbereitende Schwingungsanregung der Abdeckung 5 allein vor der Messwerterfassung ist insbesondere bei einer intermittierenden Messung zweckmäßig. Eine gleichzeitige und insbesondere kontinuierliche Schwingungsanregung während der Messung kann insbesondere im Zusammenhang mit einer kontinuierlichen Messwerterfassung vorteilhaft sein.

Die erfindungsgemäße Sensoranordnung 1 ist vorstehend im Zusammenhang mit einer Füllstandsregulierung eines Mediums im Behälter 13 beschrieben. Die erfindungsgemäße Sensoranordnung 1 kann aber auch in beliebigen anderen Anwendungsfällen eingesetzt werden, bei der Medien mit hoher Haftneigung im Bereich des Sensors 3 (Fig. 1) die Gefahr einer Messwertverfälschung mit sich bringen.

Über den schematischen Funktionsaufbau nach Fig. 1 hinausgehend ist in Fig. 3 ein konstruktiv ausgearbeitetes Ausführungsbeispiel einer erfindungsgemäßen Sensoranordnung 1 in einer Längsschnittdarstellung gezeigt. Aufbau und Funktionsweise sind analog zur Darstellung nach Fig. 1, wobei gleiche Merkmale mit gleichen Bezugszeichen versehen sind, und wobei die Sensoranordnung 1 nach Fig. 3 für die erfindungsgemäße Behälteranordnung nach Fig. 2 und die Ausführung des in diesem Zusammenhang beschriebenen erfindungsgemäßen Verfahrens vorgesehen ist. Der Sensor 3 ist im gezeigten Ausführungsbeispiel ein kapazitiver Sensor, kann aber auch von anderer geeigneter Funktionsweise sein. Das Gehäuse 8 ist zweiteilig mit einem starren, metallischen Halteteil 10 für den Sensor 3 sowie mit einem elastischen Formteil 11 ausgebildet. Im Bereich seines der Sensorfläche 4 gegenüberliegenden Endes ist der Sensor 3 druckdicht mit dem starren Halteteil 10 verbunden. Der Innenraum 9 des Gehäuses 8 ist in dem elastischen Formteil 11 ausgebildet und nimmt den Bereich des Sensors 3 mit seiner Sensorfläche 4 auf.

Das im Wesentlichen zylindrisch ausgebildete elastische Formteil 11 besteht im gezeigten Ausführungsbeispiel insgesamt und einteilig aus Silikon. Es kann aber auch ein anderes elastisches Material gewählt werden. Die den Sensor 3 in Umfangsrichtung umschließenden Umfangswände des elastischen Formteiles 11 weisen eine solche Dicke auf, dass sie ihre Form unter Einwirkung des pulsierenden Innendruckes (Fig. 1) im Wesentlichen beibehalten und allenfalls geringfügig in technisch vernachlässigbarer Größenordnung verändern. Einteilig mit den Umfangswänden ist auf der Seite der Sensorfläche 4 eine Stirnwand ausgebildet, deren Dicke erheblich geringer ist als die Dicke der Umfangswände. Hierdurch ist die schwingfähige Abdeckung 5 in Form einer elastischen Membran ausgebildet, die in der gezeigten Ruheposition lose an der Sensorfläche 4 des Sensors 3 anliegt.

Das elastische Formteil 11 ist formschlüssig am starren Halteteil 10 gehalten, wozu im gezeigten Ausführungsbeispiel eine umlaufende Nut-Feder-Verbindung 12 vorgesehen ist. Diese Form der Verbindung ist einerseits hinreichend dicht gegen den im Betrieb im Innenraum 9 wirkenden pulsierenden Druck (Fig. 1), und weist außerdem eine hinreichende Haltekraft des elastischen Formteils 11 gegenüber dem starren Halteteil 10 auf. Andererseits kann aber das elastische Formteil 11 bei Bedarf vom starren Halteteil 10 entfernt werden, um Zugriff auf den Sensor 9 zu haben. Natürlich ist im Rahmen der Erfindung aber auch eine dauerhafte Verbindung möglich, indem beispielsweise das elastische Formteil 11 als Elastomer auf das starre Halteteil 10 aufgespritzt wird. Natürlich ist auch eine Klebeverbindung oder dergleichen möglich.

Auf der dem elastischen Formteil gegenüberliegenden Stirnseite weist das Halteteil 10 eine Durchführung 20 auf. Die Durchführung 20 entspricht in ihrem Durchmesser in etwa dem Durchmesser des Sensors 3, so dass dieser von der dem elastischen Formteil 11 gegenüberliegenden Stirnseite aus in das Halteteil 10 eingeführt werden kann. Durch geeignete, nicht dargestellte Mittel ist der Sensor 3 im Halteteil 10 klemmend gehalten. Das Kabel 17 ist durch die Durchführung 20 aus dem Gehäuse 8 herausgeführt. Durch die Durchführung 20 ist außerdem eine Stellschraube 21 des Sensors 3 erreichbar, mittels derer die Ansprechempfmdlichkeit des Sensors 3 eingestellt werden kann. Da der Sensor 3 im Grenzbereich zwischen dem elastischen Formteil 11 und dem Halteteil 10 mit dem letztgenannten druckdicht verbunden ist, ist die Druckdichtigkeit des Innenraums 9 nicht durch die Durchführung 20 gefährdet. Weiter ist in Fig. 3 noch erkennbar, dass in der Umfangswand des Halteteils 10 ein Druckkanal 18 in Form einer Bohrung ausgebildet ist, die in Richtung des elastischen Formteiles 11 in den Innenraum 9 mündet, und die an der gegenüberliegenden Stirnseite mit einem Druckanschluss 19 versehen ist. Mittels des Druckanschlusses 19 ist eine lösbare Verbindung des Druckkanals 8 bzw. der Sensoranordnung 1 insgesamt mit der Druckleitung 14 nach Fig. 1 möglich.

## Patentansprüche

1. Sensoranordnung (1) zur kontaktbehafteten Erfassung eines Mediums, insbesondere eines Pulvers (2), umfassend einen Sensor (3) mit einer Sensorfläche (4), **dadurch gekennzeichnet, dass** eine Abdeckung (5) der Sensorfläche (4) und eine Erregungseinrichtung (6) für eine Schwingungserregung der Abdeckung (5) vorgesehen sind.

2. Sensoranordnung nach Anspruch 1,
**dadurch gekennzeichnet, dass** die Abdeckung (5) eine elastische Membran ist.

3. Sensoranordnung nach Anspruch 1 oder 2,
**dadurch gekennzeichnet, dass** der Sensor (3) ortsfest gehalten ist, und dass die Abdeckung (5) unabhängig vom Sensor (3) schwingend bewegbar ist.

4. Sensoranordnung nach Anspruch 3,
**dadurch gekennzeichnet, dass** die Abdeckung (5) im Ruhezustand lose zumindest näherungsweise an der Sensorfläche (4) des Sensors (3) anliegt.

5. Sensoranordnung nach einem der Ansprüche 1 bis 4,
**dadurch gekennzeichnet, dass** die Erregungseinrichtung (6) eine pulsierende Druckquelle insbesondere in Form einer Membranpumpe (7) sowie ein Gehäuse (8) umfasst, wobei zumindest die Sensorfläche (4) des Sensors (3) in einem Innenraum (9) des Gehäuses (8) angeordnet ist, wobei die Abdeckung (5) als Teil des Gehäuses (8) dessen Innenraum (9) dichtend begrenzt, und wobei eine druckübertragende Verbindung der pulsierenden Druckquelle mit dem Innenraum (9) derart vorgesehen ist, dass der Innenraum (9) einschließlich der Abdeckung (5) mit dem pulsierenden Druck der Druckquelle beaufschlagbar ist.

6. Sensoranordnung nach Anspruch 5,
**dadurch gekennzeichnet, dass** das Gehäuse (8) ein starres Halteteil (10) für den Sensor (3) sowie ein elastisches Formteil (11) mit der insbesondere einteilig daran ausgebildeten Abdeckung (5) umfasst.

7. Sensoranordnung nach Anspruch 6,
**dadurch gekennzeichnet, dass** das starre Halteteil (10) und der Sensor (3) druckdicht miteinander verbunden sind, wobei der Innenraum (9) im elastischen Formteil (11) ausgebildet ist.

8. Sensoranordnung nach Anspruch 6 oder 7,
**dadurch gekennzeichnet, dass** das elastische Formteil (11) aus Silikon gebildet ist.

9. Sensoranordnung nach einem der Ansprüche 6 bis 8,
**dadurch gekennzeichnet, dass** das elastische Formteil (11) insbesondere mittels einer umlaufenden Nut-Feder-Verbindung (12) formschlüssig am starren Halteteil (10) gehalten ist.

10. Behälteranordnung zur Bereitstellung eines Mediums, insbesondere eines Pulvers (2), umfassend einen Behälter (13), in dem das Medium bevorratet ist, sowie eine im Behälter (13) mittels ihrer Abdeckung (5) füllstandsabhängig in direktem Kontakt mit dem bevorrateten Medium stehende Sensoranordnung (1) nach einem der Ansprüche 1 bis 9.

11. Behälteranordnung nach Anspruch 10,
**dadurch gekennzeichnet, dass** im Behälter (13) ein Sollfüllstand des Mediums vorgesehen ist, und dass die Sensoranordnung (1) in Höhe des Sollfüllstandes angeordnet ist.

12. Verfahren zur prüfenden Erfassung eines Mediums, insbesondere eines Pulvers (2), mittels einer Behälteranordnung nach Anspruch 10 oder 11, umfassend folgende Verfahrensschritte:
- Das zu erfassende Medium wird in den Behälter (13) gefüllt;
- Die Abdeckung (5) der Sensorfläche (4) wird mittels der Erregungseinrichtung (6) zur Schwingung angeregt und dadurch von anhaftendem Medium befreit;
- Mittels der Sensoranordnung (1) wird das Medium prüfend erfasst.

13. Verfahren nach Anspruch 12,
**gekennzeichnet durch** folgende zusätzliche Verfahrensschritte:
- Mittels der in Höhe des Sollfüllstandes angeordneten Sensoranordnung (1) wird erfasst, ob das Medium in direktem Kontakt mit der Abdeckung (5) der Sensoranordnung (1) steht;
- Falls die Erfassung mittels der Sensoranordnung (1) hervorbringt, dass kein Medium in direktem Kontakt mit der Abdeckung (5) der Sensoranordnung (1) steht, wird Medium in den Behälter (13) nachgefüllt;
- Falls die Erfassung mittels der Sensoranordnung (1) hervorbringt, dass das Medium in direktem Kontakt mit der Abdeckung (5) der Sensoranordnung (1) steht, unterbleibt eine Nachfüllung des Mediums.

14. Verfahren nach Anspruch 12 oder 13,
**dadurch gekennzeichnet, dass** die Schwingungserregung der Abdeckung (5) unmittelbar vor und/oder während der prüfenden Erfassung des Mediums mittels der Sensoranordnung (1) erfolgt.

15. Verfahren nach einem der Ansprüche 12 bis 14,
**dadurch gekennzeichnet, dass** die prüfende Erfassung des Mediums mittels der Sensoranordnung (1) kontinuierlich oder intermittierend erfolgt.
